# EUROPÄISCHE PATENTSCHRIFT

(11) **EP 2 632 650 B1**
(45) Veröffentlichungstag und Bekanntmachung des Hinweises auf die Patenterteilung: **13.02.2019**
(21) Anmeldenummer: 11758485.4
(22) Anmeldetag: 23.09.2011
(51) Int. Cl.: B25F 5/00, B24B 23/02, B24B 55/00, H02K 7/10, H02P 3/04, B23Q 11/00

(54) **WERKZEUGMASCHINENBREMSVORRICHTUNG**
POWER TOOL BRAKING DEVICE
DISPOSITIF DE FREINAGE POUR MACHINE-OUTIL

(30) Priorität: 29.10.2010 DE 102010043185
(43) Veröffentlichungstag der Anmeldung: 04.09.2013
(73) Patentinhaber: Robert Bosch GmbH, 70442 Stuttgart (DE)
(72) Erfinder: NADIG, Peter, 67161 Goennheim (DE); LABER, Sebastian, 70771 Leinfelden-Echterdingen (DE); ESENWEIN, Florian, 73066 Uhingen-Holzhausen (DE); HEIZMANN, Joachim, 78194 Immendingen (DE)
(86) Internationale Anmeldenummer: PCT/EP2011/066589
(87) Internationale Veröffentlichungsnummer: WO 2012/055653

(56) Entgegenhaltungen:
- DE-A1- 4 344 424
- DE-A1- 19 510 291
- DE-A1- 19 636 873
- DE-U1-202005 007 459
- FR-A1- 2 580 126
- GB-A- 2 455 528
- US-A- 4 853 573
- US-A- 5 444 318
- US-A- 5 595 531

## Beschreibung

### Stand der Technik

Aus der DE 199 32 578 B4 ist bereits eine Werkzeugmaschinenbremsvorrichtung einer tragbaren Werkzeugmaschine bekannt, die eine Magnetfeldbremseinheit aufweist. Ein weiteres Beispiel ist aus US5595531A bekannt.

### Offenbarung der Erfindung

Die Erfindung geht aus von einer Werkzeugmaschinenbremsvorrichtung, insbesondere von einer Handwerkzeugmaschinenbremsvorrichtung, einer tragbaren Werkzeugmaschine mit zumindest einer Magnetfeldbremseinheit, wie im Anspruch 1 dargestellt.

Es wird vorgeschlagen, dass die Werkzeugmaschinenbremsvorrichtung zumindest eine Abtriebseinheit umfasst, die zumindest ein Abtriebselement aufweist, an dem zumindest ein Bremselement der Magnetfeldbremseinheit angeordnet ist. Unter einer "Abtriebseinheit" soll hier insbesondere eine Einheit verstanden werden, die mittels einer Antriebseinheit antreibbar ist und von der Antriebseinheit erzeugte Kräfte und/oder Drehmomente auf ein Bearbeitungswerkzeug überträgt. Unter einer "tragbaren Werkzeugmaschine" soll hier insbesondere eine Werkzeugmaschine, insbesondere eine Handwerkzeugmaschine, verstanden werden, die von einem Bediener transportmaschinenlos transportiert werden kann. Die tragbare Werkzeugmaschine weist insbesondere eine Masse auf, die kleiner ist als 50 kg, bevorzugt kleiner als 20 kg und besonders bevorzugt kleiner als 10 kg. Unter einer "Magnetfeldbremseinheit" soll hier insbesondere eine Bremseinheit, insbesondere eine elektromagnetische Bremseinheit, verstanden werden, die mittels einer Nutzung eines Magnetfelds eine Geschwindigkeit, insbesondere eine Umlaufgeschwindigkeit, eines sich bewegenden Bauteils, insbesondere eines sich drehenden Bauteils, im Vergleich zu einer Arbeitsgeschwindigkeit zumindest im Wesentlichen reibungsfrei verringert und/oder begrenzt, insbesondere zusätzlich zu einem rein reibungsbedingten Verringern und/oder Begrenzen der Geschwindigkeit infolge einer Lagerung des Bauteils. Unter "im Wesentlichen reibungsfrei verringern und/oder begrenzen" soll hier insbesondere ein Abbremsen eines Bauteils verstanden werden, das bis auf lagerbedingte Reibkräfte und/oder strömungsbedingte Widerstandskräfte frei von Reibkräften erfolgt. Insbesondere erfolgt das Abbremsen des Bauteils mittels der Magnetfeldbremseinheit entkoppelt von einem Kontakt zwischen dem Bauteil und einem Reibbelag eines Bremselements. Grundsätzlich ist jedoch auch denkbar, dass zusätzlich zu der zumindest im Wesentlichen reibungsfreien Magnetfeldbremseinheit eine mit der Magnetfeldbremse gekoppelte oder entkoppelte Reibbremseinheit vorgesehen ist. Des Weiteren ist die Magnetfeldbremseinheit insbesondere als eine antriebsfremde Magnetfeldbremseinheit ausgebildet. Unter einer "antriebsfremden Magnetfeldbremseinheit" soll hier insbesondere eine Magnetfeldbremseinheit verstanden werden, die entkoppelt von einem Magnetfeld einer Elektromotoreinheit ein Abbremsen eines Bauteils mittels eines Magnetfelds bewirkt. Vorzugsweise sind ein Stator und/oder ein Läufer der Elektromotoreinheit entkoppelt von dem Magnetfeld der Magnetfeldbremseinheit. Die Magnetfeldbremseinheit ist bevorzugt dazu vorgesehen, das Bauteil insbesondere in einem Zeitraum größer als 0,1 s, bevorzugt größer als 0,5 s und besonders bevorzugt kleiner als 3 s, ausgehend von einer Arbeitsgeschwindigkeit, abzubremsen, insbesondere auf eine Geschwindigkeit abzubremsen, die kleiner als 50 % der Arbeitsgeschwindigkeit ist, bevorzugt kleiner als 20 % der Arbeitsgeschwindigkeit ist und besonders bevorzugt auf eine Geschwindigkeit von 0 m/s abzubremsen. Mittels einer Anordnung eines Bremselements der Magnetfeldbremseinheit an einem Abtriebselement der Abtriebseinheit kann vorteilhaft Bauraum eingespart werden.

Des Weiteren wird vorgeschlagen, dass die Abtriebseinheit als Winkelgetriebe ausgebildet ist. Unter einem "Winkelgetriebe" soll hier insbesondere ein Getriebe verstanden werden, das eine relativ zu einer Eingangswelle abgewinkelt angeordnete Ausgangswelle aufweist, wobei die Rotationsachsen der Eingangswelle und der Ausgangswelle vorzugsweise einen gemeinsamen Schnittpunkt aufweisen. Unter "abgewinkelt angeordnet" soll hier insbesondere eine Anordnung einer Achse relativ zu einer weiteren Achse verstanden werden, insbesondere von zwei sich schneidenden Achsen, wobei die zwei Achsen einen von 180° abweichenden Winkel einschließen. Bevorzugt schließen eine Rotationsachse der Eingangswelle und eine Rotationsachse der Ausgangswelle in einem montierten Zustand der als Winkelgetriebe ausgebildeten Abtriebseinheit einen Winkel von 90° ein. Unter einer "Eingangswelle" soll hier insbesondere eine Welle verstanden werden, die Kräfte und/oder Drehmomente in die als Winkelgetriebe ausgebildete Abtriebseinheit einleitet. Die Eingangswelle kann hierbei beispielsweise als eine mit einem Ritzel ausgeführte Ankerwelle einer Elektromotoreinheit der Antriebseinheit ausgebildet sein. Unter einer "Ausgangswelle" soll hier insbesondere eine Welle verstanden werden, die Kräfte und/oder Drehmomente beispielsweise auf ein mit der Ausgangswelle drehfest verbundenes Bearbeitungswerkzeug überträgt. Unter "drehfest" soll insbesondere eine Verbindung verstanden werden, die ein Drehmoment und/oder eine Drehbewegung zumindest im Wesentlichen unverändert überträgt. Unter "zumindest im Wesentlichen unverändert übertragen" soll hier insbesondere eine bis auf einen Verlust infolge von Reibung und/oder von Toleranzen vollständige Übertragung von Kräften und/oder Drehmomenten von einem Bauteil auf ein weiteres Bauteil verstanden werden. Es kann konstruktiv einfach eine Integration der Magnetfeldbremseinheit in die als Winkelgetriebe ausgebildete Abtriebseinheit erreicht werden. Ferner kann vorteilhaft eine Relativbewegung eines Abtriebselements zur Aktivierung der Magnetfeldbremseinheit mittels der mechanischen Aktivierungseinheit genutzt werden.

Vorzugsweise ist die Magnetfeldbremseinheit entlang eines Kraftflusses, insbesondere eines Kraftflusses ausgehend von einer Elektromotoreinheit der Antriebseinheit, zumindest teilweise hinter einem Getriebeeingangszahnrad des Winkelgetriebes angeordnet. Unter einem "Getriebeeingangszahnrad" soll hier insbesondere ein Zahnrad verstanden werden, das in einem montierten Zustand des Winkelgetriebes mit einem Zahnrad der Eingangswelle, insbesondere mit einem Ritzel der Ankerwelle, in Eingriff ist. Es ist jedoch auch denkbar, dass ein als Permanentmagnet ausgebildetes Bremselement an einer einem Bearbeitungswerkzeug zugewandten Seite einer Werkzeugaufnahme angeordnet ist und das Bearbeitungswerkzeug an einer der Werkzeugaufnahme zugewandten Seite ein als Wirbelstromelement und/oder Hystereseelement ausgebildetes Bremselement umfasst. Es kann konstruktiv einfach eine kompakte Magnetfeldbremseinheit erreicht werden, die vorteilhaft auf ein Abtriebselement einwirken kann, um ein Auslaufen eines Bearbeitungswerkzeugs vorteilhaft abzubremsen.

Ferner wird vorgeschlagen, dass die Werkzeugmaschinenbremsvorrichtung zumindest eine mechanische Aktivierungseinheit aufweist. Unter einer "mechanischen Aktivierungseinheit" soll hier insbesondere eine Einheit verstanden werden, die infolge einer Relativbewegung einen Auslösevorgang und/oder einen Aktivierungsvorgang, insbesondere der Magnetfeldbremseinheit, einleitet, wobei die Relativbewegung von einer reinen Schaltbewegung eines Schaltelements zur Erzeugung eines elektrischen Signals abweichend ist und insbesondere von einer Bewegung eines Magnetelements und/oder von einer trägheitsbedingten Bewegung gebildet ist, insbesondere von einer trägheitsbedingten Bewegung eines sich drehenden Antriebselements, Abtriebselements und/oder eines Bearbeitungswerkzeugs. In diesem Zusammenhang soll hier unter einem "Auslösevorgang" insbesondere eine mechanische, elektrische, magnetische und/oder elektronische Signalisierung eines Zustands verstanden werden, die dazu vorgesehen ist, einen Aktivierungsvorgang einzuleiten. Unter einem "Aktivierungsvorgang" soll hier insbesondere eine mechanische, elektrische, magnetische und/oder elektronische Aktivierung der Magnetfeldbremseinheit zur Erzeugung von Kräften und/oder Drehmomenten zum Abbremsen eines Bauteils verstanden werden. In diesem Zusammenhang soll unter "vorgesehen" insbesondere speziell programmiert, ausgelegt und/oder ausgestattet verstanden werden.

In einer bevorzugten Ausführung der erfindungsgemäßen Werkzeugmaschinenbremsvorrichtung ist die Aktivierungseinheit dazu vorgesehen, den Auslösevorgang und den Aktivierungsvorgang infolge der Relativbewegung einzuleiten, insbesondere zumindest im Wesentlichen zeitlich unverzögert. Hierbei kann die Aktivierungseinheit dazu vorgesehen sein, infolge der Relativbewegung beispielsweise einen Auslösevorgang zu signalisieren und zumindest im Wesentlichen zeitgleich einen Aktivierungsvorgang der Magnetfeldbremseinheit einzuleiten. Eine Ausgestaltung der mechanischen Aktivierungseinheit, bei der durch die Relativbewegung als Auslösevorgang ein Schalter betätigt wird und ein mittels eines Aktors und/oder einer Federkraft und/oder mittels anderer, einem Fachmann als sinnvoll erscheinender Betätigungselemente an den Auslösevorgang anschließender Aktivierungsvorgang eingeleitet wird, ist ebenfalls denkbar. Ferner ist es ebenfalls denkbar, dass die Aktivierungseinheit eine Sensoreinheit umfasst, die die Relativbewegung sensiert und infolgedessen einen Auslösevorgang einleitet, wobei der Aktivierungsvorgang beispielsweise mittels eines Aktors eingeleitet wird.

Eine weitere erfindungsgemäße Ausgestaltung der Werkzeugmaschinenbremsvorrichtung kann darin bestehen, dass die Aktivierungseinheit mechanisch, elektrisch, magnetisch und/oder elektronisch mit einem Elektromagnet der Magnetfeldbremseinheit verbunden ist, wobei der Elektromagnet dazu vorgesehen ist, in zumindest einem Betriebsmodus ein magnetisches Feld der Magnetfeldbremseinheit zu beeinflussen. Der Elektromagnet kann ein zusätzliches Magnetfeld zu einem bereits bestehenden Magnetfeld der Magnetfeldbremseinheit erzeugen. Hierbei ist es denkbar, dass das zusätzliche Magnetfeld in einem Arbeitsmodus zumindest magnetische Kräfte des bereits bestehende Magnetfelds der Magnetfeldbremseinheit zumindest teilweise kompensiert und/oder zumindest im Vergleich zu einer Stärke der magnetischen Kraft des Magnetfelds in einem Bremsmodus zumindest teilweise abschwächt. Der Elektromagnet der Magnetfeldbremseinheit kann vorteilhaft ebenfalls dazu vorgesehen sein, während eines Anlaufens einer Elektromotoreinheit der tragbaren Werkzeugmaschine in einem Betriebsmodus ein zusätzliches Drehmoment zur Erreichung einer Arbeitsdrehzahl der Elektromotoreinheit in einer kurzen Zeitspanne zu ermöglichen, wie vorzugsweise zur Erreichung eines Boostbetriebs. Mittels der mechanischen Aktivierungseinheit kann vorteilhaft eine zuverlässige Auslösung und/oder Aktivierung der Magnetfeldbremseinheit erreicht werden. Ferner kann in einer bevorzugten Ausführung der erfindungsgemäßen Werkzeugmaschinenbremsvorrichtung vorteilhaft auf elektrische Bauteile zum Auslösen und/oder Aktivieren der Magnetfeldbremseinheit verzichtet werden. Hierdurch kann vorteilhaft eine Fehleranfälligkeit der Magnetfeldbremseinheit gering gehalten werden.

Des Weiteren wird vorgeschlagen, dass die Aktivierungseinheit infolge einer Relativbewegung wenigstens eine Kenngröße eines magnetischen Felds der Magnetfeldbremseinheit ändert. Unter einer "Kenngröße eines magnetischen Felds" soll hier insbesondere ein Parameter verstanden werden, der ein magnetisches Feld definiert, wie beispielsweise ein magnetischer Fluss, eine magnetische Feldstärke, ein magnetischer Widerstand, eine magnetische Spannung usw. Der Begriff "ändern" soll hier insbesondere "einstellen" und/oder "beeinflussen" definieren. Die Relativbewegung ist bevorzugt eine Relativbewegung von zwei Bauteilen einer Abtriebseinheit und/oder einer Antriebseinheit und/oder von zwei Bremselementen der Magnetfeldbremseinheit. Es kann vorteilhaft eine Einstellbarkeit der Magnetfeldbremseinheit infolge der Relativbewegung erreicht werden. Ferner kann vorteilhaft eine Aktivierung der Magnetfeldbremseinheit infolge einer Relativbewegung von zwei relativ zueinander beweglich gelagerten Bauteilen erreicht werden.

Vorzugsweise weist die Magnetfeldbremseinheit zumindest ein Bremselement auf, das als Permanentmagnet ausgebildet ist. Es ist jedoch auch denkbar, dass die Magnetfeldbremseinheit in einer alternativen Ausgestaltung ein als Spule ausgebildetes Bremselement zur Erzeugung eines magnetischen Felds aufweist. Besonders bevorzugt weist die Magnetfeldbremseinheit zumindest zwei Bremselemente auf, die als Permanentmagnete ausgebildet sind. Die zwei als Permanentmagnete ausgebildeten Bremselemente sind bevorzugt relativ zueinander beweglich gelagert, insbesondere relativ zu einander verdrehbar gelagert. Die Permanentmagnete sind vorzugsweise aus Selten-Erd-Magneten, wie beispielsweise Neodym-Eisen-Bor (NdFeB), Samarium-Cobalt (SmCo) usw. ausgeführt. Es ist jedoch auch denkbar, die Permanentmagnete aus einem anderen, einem Fachmann als sinnvoll erscheinenden Werkstoff auszuführen. Die Permanentmagnete sind vorzugsweise kreisringförmig ausgebildet. Des Weiteren weisen die Permanentmagnete vorzugsweise entlang einer Umfangsrichtung angeordnete Winkelsegmente auf, die entlang der Umfangsrichtung eine alternierende Polarität aufweisen. Es kann konstruktiv einfach eine Magnetfeldbremseinheit erreicht werden. Ferner kann vorteilhaft eine von einer Spannungsversorgung unabhängige Magnetfeldbremseinheit erreicht werden.

Ferner wird vorgeschlagen, dass die Aktivierungseinheit eine Polstellung des Permanentmagnets relativ zu einem weiteren als Permanentmagnet ausgebildeten Bremselement der Magnetfeldbremseinheit ändert. Der Ausdruck "Polstellung ändern" soll hier insbesondere eine Änderung einer Stellung von Polen des Permanentmagnets relativ zu Polen des weiteren Permanentmagnets definieren. Bevorzugt werden die Permanentmagnete relativ zueinander um eine Achse verdreht, insbesondere um einen einer Polteilung der Permanentmagnete entsprechenden Winkel. Unter einer "Polteilung" soll insbesondere eine Aufteilung einer Strecke, insbesondere eines Umfangs von 360°, der Permanentmagnete in gleichmäßig entlang einer Richtung, insbesondere der Umfangsrichtung, hintereinander angeordnete Polsegmente, insbesondere Winkelsegmente mit einer Polarität, der Permanentmagnete verstanden werden, wobei die Polsegmente entlang der Richtung eine relativ zueinander abwechselnde Polarität aufweisen. Die Pole sind vorzugsweise entlang der Umfangsrichtung relativ zueinander versetzt angeordnet. Hierbei sind die Pole bevorzugt aneinander angrenzend angeordnet. Es ist jedoch auch denkbar, dass die Pole beabstandet zueinander angeordnet sind, insbesondere entlang der Umfangsrichtung betrachtet. Es kann konstruktiv einfach eine Veränderung des magnetischen Felds erzeugt werden, das dazu vorgesehen ist, ein Abbremsen eines sich bewegenden Bauteils zu erreichen.

Vorteilhafterweise ist die Magnetfeldbremseinheit als Wirbelstrombremse ausgebildet. Unter einer "Wirbelstrombremse" soll hier insbesondere eine Bremse verstanden werden, die Wirbelstromverluste eines in einem Magnetfeld bewegten metallischen Elements zum Abbremsen des Elements nutzt. Bevorzugt ist zur Ausgestaltung der Magnetfeldbremseinheit als Wirbelstrombremse zwischen den zumindest zwei Permanentmagneten eine aus einem elektrisch vorteilhaft leitfähigen Material, wie beispielsweise Kupfer und/oder Aluminium, ausgebildete Wirbelscheibe angeordnet. Unter dem Begriff "zwischen" soll hier insbesondere eine räumliche Anordnung verstanden werden, bei der zumindest entlang einer Achse Bauteile hintereinander angeordnet sind und sich, entlang der Achse betrachtet, zumindest teilweise überdecken. Es kann vorteilhaft kostengünstig eine Magnetfeldbremseinheit erreicht werden.

In einer alternativen Ausgestaltung der erfindungsgemäßen Werkzeugmaschinenbremsvorrichtung ist die Magnetfeldbremseinheit als Hysteresebremse ausgebildet. Unter einer "Hysteresebremse" soll hier insbesondere eine Bremse verstanden werden, die mittels einer Ummagnetisierung eines sich in einem Magnetfeld bewegenden Elements, insbesondere eines ferromagnetischen Elements, eine Bremskraft und/oder ein Bremsmoment erzeugt. Bevorzugt ist zur Ausgestaltung der Magnetfeldbremseinheit als Hysteresebremse zwischen den zumindest zwei Permanentmagneten ein aus einem ferromagnetischen Material ausgebildetes Bremselement der Magnetfeldbremseinheit angeordnet. Es kann vorteilhaft eine Magnetfeldbremseinheit mit einer langen Lebensdauer erreicht werden.

In einer alternativen Ausgestaltung der erfindungsgemäßen Werkzeugmaschinenbremsvorrichtung ist es denkbar, dass die Werkzeugmaschinenbremsvorrichtung zusätzlich zur Abtriebseinheit zumindest eine Antriebseinheit umfasst. Die Antriebseinheit weist zumindest ein Antriebselement auf, an dem zumindest ein Bremselement der Magnetfeldbremseinheit angeordnet ist. Unter einer "Antriebseinheit" soll hier insbesondere eine Einheit verstanden werden, die zumindest eine Elektromotoreinheit umfasst und die dazu vorgesehen ist, mittels einer Energieumformung, insbesondere einer Umformung von elektrischer Energie in mechanische Energie, Antriebskräfte und/oder Antriebsdrehmomente zu erzeugen. Bevorzugt ist die Antriebseinheit mit einer Abtriebseinheit zur Übertragung der Antriebskräfte und/oder der Antriebsdrehmomente auf ein Bearbeitungswerkzeug zur Bearbeitung eines Werkstücks gekoppelt. Mittels einer Anordnung eines Bremselements der Magnetfeldbremseinheit an einem Antriebselement der Antriebseinheit kann vorteilhaft eine kompakte Magnetfeldbremseinheit erreicht werden. Vorteilhafterweise ist das Antriebselement, an dem das Bremselement zumindest teilweise angeordnet sein kann, als Ankerwelle ausgebildet. Unter einer "Ankerwelle" soll hier insbesondere eine Welle verstanden werden, auf der zumindest eine magnetisierbare Einheit der Elektromotoreinheit und/oder ein Ritzel zur Übertragung von Kräften und/oder Drehmomenten angeordnet ist. Besonders bevorzugt ist das Bremselement drehfest mit der Ankerwelle verbunden. Es ist jedoch auch denkbar, dass das Bremselement auf einer mit der Ankerwelle, insbesondere mittels einer lösbaren Kupplung, drehfest gekoppelten Welle angeordnet ist. Es kann vorteilhaft ein hoher Wirkungsgrad der Magnetfeldbremseinheit erreicht werden. Vorzugsweise ist das Bremselement auf einer einer Antriebsseite abgewandten Seite der Antriebseinheit angeordnet. Unter einer "Antriebsseite" soll hier insbesondere eine Seite der Antriebseinheit verstanden werden, die entlang einer Rotationsachse der Antriebseinheit, insbesondere der Ankerwelle der Elektromotoreinheit, einer Abtriebseinheit zugewandt ist und/oder auf der ein Ritzel der Antriebseinheit angeordnet ist, das im Eingriff mit einem Zahnrad einer Abtriebseinheit ist. Es ist jedoch auch denkbar, dass das Bremselement auf der Antriebsseite der Antriebseinheit angeordnet ist. Es kann vorteilhaft bereits vorhandener Bauraum genutzt werden. Ferner kann ein durch eine auf der Antriebsseite angeordnete Lüftereinheit erzeugter Kühlluftstrom zur Kühlung der Antriebseinheit erreicht werden, der entkoppelt von einer Wärmeentwicklung der Magnetfeldbremseinheit ist.

Ferner ist in einer weiteren alternativen Ausgestaltung denkbar, dass die Magnetfeldbremseinheit als Montagemodul ausgebildet ist. Der Ausdruck "Montagemodul" soll hier insbesondere einen Aufbau einer Einheit definieren, bei dem mehrere Bauteile vormontiert werden und die Einheit als Ganzes in einem Gesamtsystem, insbesondere in einer tragbaren Werkzeugmaschine, montiert wird. Das Montagemodul weist bevorzugt zumindest ein Befestigungselement auf, das dazu vorgesehen ist, das Montagemodul mit dem Gesamtsystem lösbar zu verbinden. Vorteilhafterweise kann das Montagemodul insbesondere mit weniger als 10 Befestigungselementen von dem Gesamtsystem demontiert werden, bevorzugt mit weniger als 8 Befestigungselementen und besonders bevorzugt mit weniger als 5 Befestigungselementen. Die Befestigungselemente sind besonders bevorzugt als Schrauben ausgebildet. Es ist jedoch auch denkbar, dass die Befestigungselemente als andere, einem Fachmann als sinnvoll erscheinende Elemente, wie beispielsweise Schnellspannelemente, werkzeuglos betätigbare Befestigungselemente usw., ausgebildet sind. Vorzugsweise kann zumindest eine Funktion des Montagemoduls, insbesondere eine Änderung der Polstellung der Permanentmagnete zur Aktivierung der Magnetfeldbremseinheit, in einem von dem Gesamtsystem demontierten Zustand gewährleistet werden. Das Montagemodul kann besonders bevorzugt von einem Endnutzer demontiert werden. Somit ist das Montagemodul als austauschbare Einheit ausgebildet, die durch ein weiteres Montagemodul ausgetauscht werden kann, wie beispielsweise im Fall eines Defekts des Montagemoduls oder einer Funktionserweiterung und/oder Funktionsänderung des Gesamtsystems. Mittels einer Ausgestaltung der Magnetfeldbremseinheit als Montagemodul kann vorteilhaft ein breites Einsatzspektrum der Magnetfeldbremseinheit erreicht werden. Eine Integration in bereits bestehende tragbare Werkzeugmaschinen kann ferner konstruktiv einfach erreicht werden. Des Weiteren können somit Produktionskosten vorteilhaft gering gehalten werden.

Die Erfindung geht ferner aus von einer tragbaren Werkzeugmaschine, insbesondere von einer tragbaren Handwerkzeugmaschine, mit einer erfindungsgemäßen Werkzeugmaschinenbremsvorrichtung, insbesondere mit einer Handwerkzeugmaschinenbremsvorrichtung. Die tragbare Werkzeugmaschine kann hierbei als Winkelschleifer, als Bohrmaschine, als Handkreissäge, als Meißelhammer und/oder als Bohrhammer usw. ausgebildet sein. Es kann vorteilhaft eine Sicherheitsfunktion für einen Bediener der tragbaren Werkzeugmaschine erreicht werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Werkzeugmaschine mit einer erfindungsgemäßen Werkzeugmaschinenbremsvorrichtung in einer schematischen Darstellung,
- Fig. 2: eine Detailansicht der erfindungsgemäßen Werkzeugmaschinenbremsvorrichtung aus Figur 1 in einer schematischen Darstellung,
- Fig. 3: eine Detailansicht eines Abtriebselements einer Abtriebseinheit einer Magnetfeldbremseinheit der erfindungsgemäßen Werkzeugmaschinenbremsvorrichtung aus Figur 2 in einer schematischen Darstellung,
- Fig. 4: eine Detailansicht eines weiteren Abtriebselements der Abtriebseinheit der Magnetfeldbremseinheit der erfindungsgemäßen Werkzeugmaschinenbremsvorrichtung aus Figur 2 in einer schematischen Darstellung,
- Fig. 5: eine Detailansicht eines als Permanentmagnet ausgebildeten Bremselements der Magnetfeldbremseinheit der erfindungsgemäßen Werkzeugmaschinenbremsvorrichtung in einer schematischen Darstellung,

- Fig. 6: eine Detailansicht der als Montagemodul ausgebildeten Magnetfeldbremseinheit zur Montage an der erfindungsgemäßen Werkzeugmaschineg aus Figur 1 in einer schematischen Darstellung,
- Fig. 7: eine Detailansicht eines zusätzlichen Montagemoduls zur alternativen Montage an der erfindungsgemäßen Werkzeugmaschine aus Figur 1 in einer schematischen Darstellung,
- Fig. 8: eine Detailansicht einer alternativen Ausführung einer erfindungsgemäßen Werkzeugmaschinenbremsvorrichtung in einer schematischen Darstellung und
- Fig. 9: eine Detailansicht einer weiteren alternativen Ausführung einer erfindungsgemäßen Werkzeugmaschinenbremsvorrichtung in einer schematischen Darstellung.

### Beschreibung des Ausführungsbeispiels

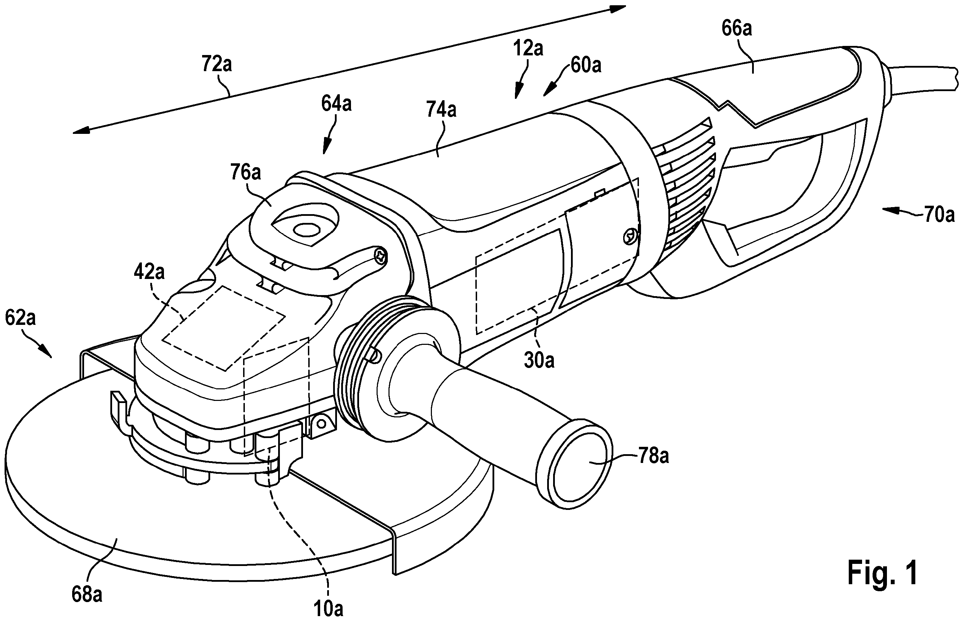

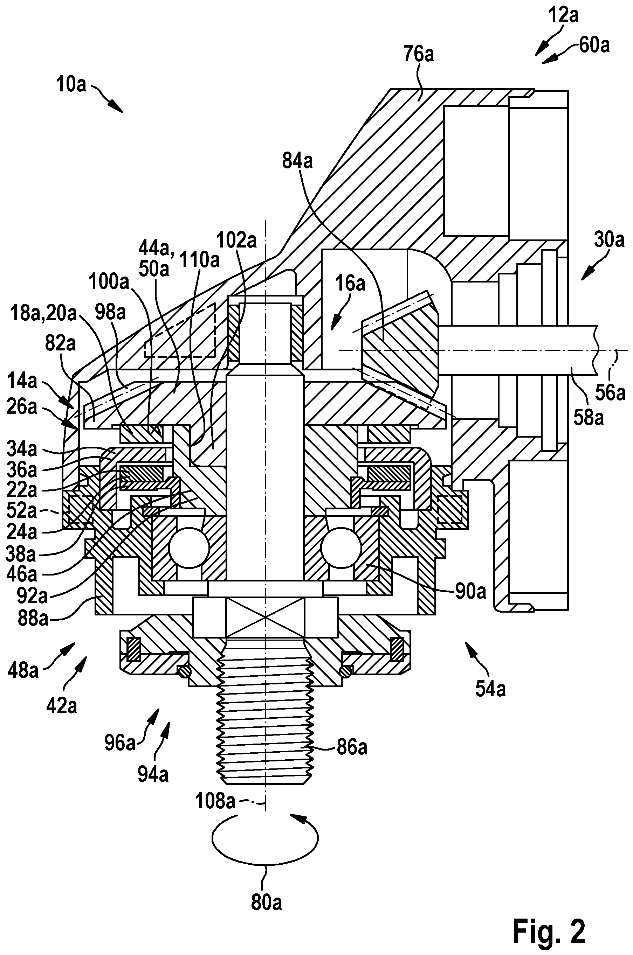

Figur 1 zeigt eine als Winkelschleifer 60a ausgebildete tragbare Werkzeugmaschine 12a mit einer Werkzeugmaschinenbremsvorrichtung 10a. Der Winkelschleifer 60a umfasst eine Schutzhaubeneinheit 62a, ein Werkzeugmaschinengehäuse 64a und einen Haupthandgriff 66a, der sich an einer einem Bearbeitungswerkzeug 68a abgewandten Seite 70a des Werkzeugmaschinengehäuses 64a in Richtung einer Haupterstreckungsrichtung 72a des Winkelschleifers 60a erstreckt. Das Bearbeitungswerkzeug 68a ist hierbei als Schleifscheibe ausgebildet. Es ist jedoch auch denkbar, dass das Bearbeitungswerkzeug 68a als Trenn- oder Polierscheibe ausgebildet ist. Das Werkzeugmaschinengehäuse 64a umfasst ein Motorgehäuse 74a zur Aufnahme einer Antriebseinheit 30a des Winkelschleifers 60a und ein Getriebegehäuse 76a zur Aufnahme einer Abtriebseinheit 42a der Werkzeugmaschinenbremsvorrichtung 10a. Die Antriebseinheit 30a ist dazu vorgesehen, das Bearbeitungswerkzeug 68a über die Abtriebseinheit 42a rotierend anzutreiben. Die Abtriebseinheit 42a ist über ein um eine Rotationsachse 56a rotierend angetriebenes Antriebselement 32a der Antriebseinheit 30a mit der Antriebseinheit 30a verbunden. Das Antriebselement 32a ist als Ankerwelle 58a ausgebildet (Figur 2). An dem Getriebegehäuse 76a ist ein Zusatzhandgriff 78a angeordnet. Der Zusatzhandgriff 78a erstreckt sich quer zur Haupterstreckungsrichtung 72a des Winkelschleifers 60a.

Die Werkzeugmaschinenbremsvorrichtung 10a ist in einem Getriebegehäuse 76a des Winkelschleifers 60a angeordnet. Ferner weist die Werkzeugmaschinenbremsvorrichtung 10a eine Magnetfeldbremseinheit 14a und eine mechanische Aktivierungseinheit 16a auf (Figur 2). Die Aktivierungseinheit 16a ist dazu vorgesehen, infolge einer Relativbewegung eine Kenngröße eines magnetischen Felds der Magnetfeldbremseinheit 14a zu ändern. Des Weiteren umfasst die Werkzeugmaschinenbremsvorrichtung 10a die Abtriebseinheit 42a, die ein Abtriebselement 44a aufweist, an dem zumindest ein als erster Permanentmagnet 20a ausgebildetes Bremselement 18a der Magnetfeldbremseinheit 14a angeordnet ist. Die Abtriebseinheit 42a ist als Winkelgetriebe 48a ausgebildet, das zur Drehmomentübertragung mit einer Antriebseinheit 30a des Winkelschleifers 60a gekoppelt ist. Die Magnetfeldbremseinheit 14a ist entlang eines von der Antriebseinheit 30a ausgehenden Kraftflusses hinter einem Getriebeeingangszahnrad 50a des Winkelgetriebes 48a angeordnet. Das Abtriebselement 44a ist hierbei als Tellerrad 82a ausgebildet. Das Tellerrad 82a ist in einem montierten Zustand der Werkmaschinenbremsvorrichtung 10a im Eingriff mit einem Ritzel 84a der Antriebseinheit 30a. Das Getriebeeingangszahnrad 50a wird somit von dem Tellerrad 82a gebildet.

Die Abtriebseinheit 42a umfasst ferner eine drehbar gelagerte Spindel 86a, einen Lagerflansch 88a, ein im Lagerflansch 88a angeordnetes Lagerelement 90a und ein drehfest mit der Spindel 86a gekoppeltes Abtriebselement 46a, das als Mitnahmeelement 92a ausgebildet ist. Das Tellerrad 82a ist mittels einer Spielpassung auf der Spindel 86a angeordnet. Der Lagerflansch 88a ist mittels Befestigungselementen (hier nicht näher dargestellt) der Abtriebseinheit 42a lösbar mit dem Getriebegehäuse 76a verbunden. Ferner kann das Bearbeitungswerkzeug 68a mittels eines Befestigungselements (hier nicht näher dargestellt) zur Bearbeitung eines Werkstücks drehfest mit der Spindel 86a verbunden werden. Das Bearbeitungswerkzeug 68a kann somit in einem Betrieb des Winkelschleifers 60a rotierend angetrieben werden. Die Werkzeugmaschinenbremsvorrichtung 10a weist des Weiteren eine Ablaufsicherungseinheit 94a auf, die dazu vorgesehen ist, ein Ablaufen des Bearbeitungswerkzeugs 68a und/oder des Befestigungselements von der Spindel 86a in einem Bremsmodus zu verhindern. Die Ablaufsicherungseinheit 94a ist hierbei als Aufnahmeflansch 96a ausgebildet, der mittels eines Formschlusses drehfest mit der Spindel 86a verbunden ist. Es ist jedoch auch denkbar, dass der Aufnahmeflansch 96a mittels anderer, einem Fachmann als sinnvoll erscheinender Verbindungsarten drehfest mit der Spindel 86a verbunden ist.

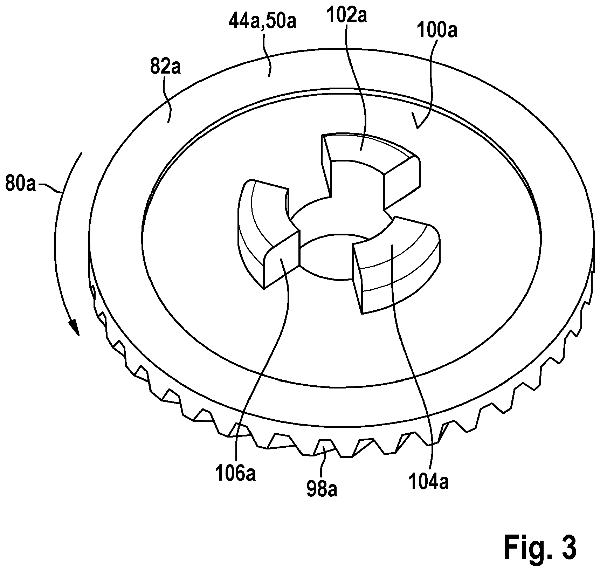

Figur 3 zeigt eine Detailansicht des Tellerrads 82a der Abtriebseinheit 42a. Das Tellerrad 82a ist aus einem magnetisch leitenden Material, wie beispielsweise einem ferromagnetischen Material gebildet. Hierdurch kann ein magnetisches Feld im Bereich des Tellerrads 82a verdichtet werden und Streuflüsse können gering gehalten werden. Des Weiteren weist das Tellerrad 82a auf einer einer Verzahnung 98a des Tellerrads 82a abgewandten Seite 100a des Tellerrads 82a drei Drehmitnahmeelemente 102a, 104a, 106a auf. Es ist jedoch auch denkbar, dass das Tellerrad 82a eine von drei abweichende Anzahl an Drehmitnahmeelementen 102a, 104a, 106a aufweist. Ein Fachmann wird je nach Anwendungsgebiet eine geeignete Anzahl an Drehmitnahmeelementen 102a, 104a, 106a am Tellerrad 82a vorsehen. Die Drehmitnahmeelemente 102a, 104a, 106a sind entlang einer Umfangsrichtung 80a gleichmäßig verteilt auf der der Verzahnung 98a abgewandten Seite 100a des Tellerrads 82a angeordnet. Die Umfangsrichtung 80a erstreckt sich hierbei in einer senkrecht zu einer Rotationsachse 108a des Tellerrads 82a verlaufenden Ebene. Das Tellerrad 82a rotiert in einem Betrieb zur Übertragung von Drehmomenten auf das Bearbeitungswerkzeug 68a um die Rotationsachse 108a. Ferner erstrecken sich die Drehmitnahmeelemente 102a, 104a, 106a senkrecht zu der der Verzahnung 98a abgewandten Seite 100a des Tellerrads 82a. In einem montierten Zustand der Abtriebseinheit 42a erstrecken sich die Drehmitnahmeelemente 102a, 104a, 106a in Richtung des Mitnahmeelements 92a (Figur 2).

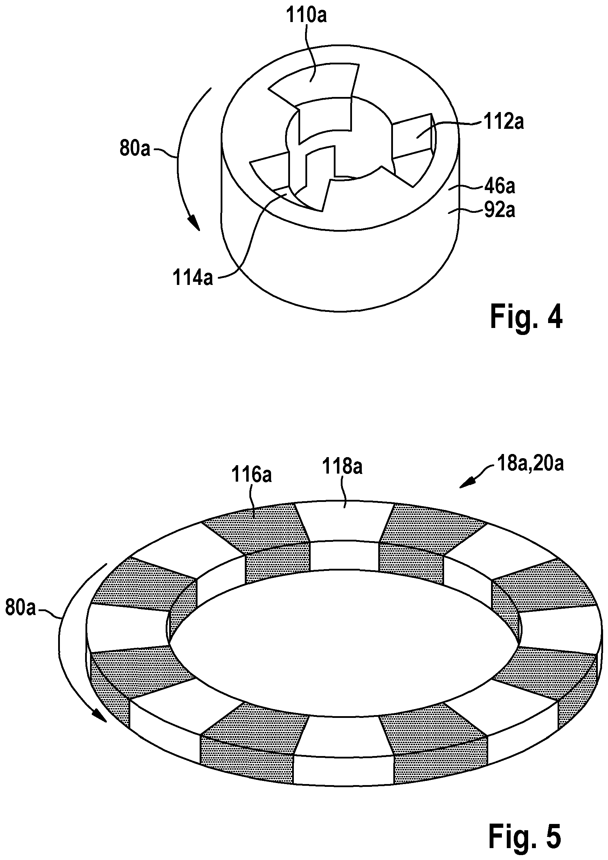

Figur 4 zeigt eine Detailansicht des Mitnahmeelements 92a. Das Mitnahmeelement 92a weist zur Aufnahme der Drehmitnahmeelemente 102a, 104a, 106a Drehmitnahmeausnehmungen 110a, 112a, 114a auf. Die Drehmitnahmeelemente 102a, 104a, 106a erstrecken sich somit in einem montierten Zustand entlang der Rotationsachse 108a des Tellerrads 82a in die Drehmitnahmeausnehmungen 110a, 112a, 114a hinein. Die Drehmitnahmeausnehmungen 110a, 112a, 114a sind entlang der Umfangsrichtung 80a gleichmäßig verteilt am Mitnahmeelement 92a angeordnet. Ferner weisen die Drehmitnahmeausnehmungen 110a, 112a, 114a entlang der Umfangsrichtung 80a eine im Vergleich zu den Drehmitnahmeelementen 102a, 104a, 106a größere Erstreckung auf. Es wird ein Drehspiel zwischen dem Tellerrad 82a und dem Mitnahmeelement 92a entlang der Umfangsrichtung 80a erreicht. Das Drehspiel wird von einem Winkelbereich gebildet, um den das Tellerrad 82a relativ zum Mitnahmeelement 92a gedreht werden kann. Der Winkelbereich wird hierbei durch einen Kreisumfang von 360°, geteilt durch die Anzahl der Pole der Permanentmagnete 20a, 22a, gebildet. Die Drehmitnahmeelemente 102a, 104a, 106a können somit entlang der Umfangsrichtung 80a in den Drehmitnahmeausnehmungen 110a, 112a, 114a relativ zu Randbereichen der Drehmitnahmeausnehmungen 110a, 112a, 114a bewegt werden. Das Mitnahmeelement 92a koppelt bei einem Anliegen der Drehmitnahmeelemente 102a, 104a, 106a an Randbereichen der Drehmitnahmeausnehmungen 110a, 112a, 114a das Tellerrad 82a drehfest mit der Spindel 86a. Die Relativbewegung des Tellerrads 82a relativ zum Mitnahmeelement 92a wird von der Aktivierungseinheit 16a zur Änderung einer Kenngröße eines magnetischen Felds der Magnetfeldbremseinheit 14a genutzt. Es ist jedoch auch denkbar, dass die Drehmitnahmeelemente 102a, 104a, 106a am Mitnahmeelement 92a und die Drehmitnahmeausnehmungen 110a, 112a, 114a am Tellerrad 82a angeordnet sind. Die Drehmitnahmeelemente 102a, 104a, 106a des Tellerrads 82a und die Drehmitnahmeausnehmungen 110a, 112a, 114a des Mitnahmeelements 92a bilden die mechanische Aktivierungseinheit 16a.

Der mit dem Tellerrad 82a drehfest verbundene erste Permanentmagnet 20a ist kreisringförmig ausgebildet (Figur 5). Der erste Permanentmagnet 20a ist auf der der Verzahnung 98a abgewandten Seite 100a des Tellerrads 82a angeordnet. Ferner weist der erste Permanentmagnet 20a entlang der Umfangsrichtung 80a gleichmäßig verteilte Winkelsegmente 116a, 118a auf. Die Winkelsegmente 116a, 118a weisen entlang der Umfangsrichtung 80a eine relativ zueinander abwechselnde Polarität auf. Die Polaritäten wechseln entlang der Umfangsrichtung 80a stetig zwischen magnetischem Nordpol und magnetischem Südpol. Die Magnetfeldbremseinheit 14a weist ein weiteres als zweiter Permanentmagnet 22a ausgebildetes Bremselement 24a auf. Der zweite Permanentmagnet 22a ist kreisringförmig ausgebildet und weist entlang der Umfangsrichtung 80a gleichmäßig verteilte Winkelsegmente auf (hier nicht näher dargestellt). Ferner ist der zweite Permanentmagnet 22a drehfest mittels eines Rückschlusselements 38a an dem Mitnahmeelement 92a angeordnet. Das Rückschlusselement 38a ist dazu vorgesehen, ein magnetisches Feld der Magnetfeldbremseinheit 14a im Bereich der Magnetfeldbremseinheit 14a zu verdichten und Streuflüsse gering zu halten.

Des Weiteren weist die Magnetfeldbremseinheit 14a ein weiteres Bremselement 34a auf, das als Wirbelstromelement 36a ausgebildet ist. Somit ist die Magnetfeldbremseinheit 14a als Wirbelstrombremse 26a ausgebildet. Das Wirbelstromelement 36a ist aus einem elektrisch leitfähigen Material gebildet, wie beispielsweise Aluminium und/oder Kupfer. Ferner ist das Wirbelstromelement 36a entlang der Rotationsachse 108a des Tellerrads 82a axial zwischen dem ersten Permanentmagnet 20a und dem zweiten Permanentmagnet 22a angeordnet. Das Wirbelstromelement 36a ist fest mit dem Lagerflansch 88a verbunden. Somit werden der erste Permanentmagnet 20a und der zweite Permanentmagnet 22a in einem Betrieb des Winkelschleifers 60a mittels der Spindel 86a relativ zum Wirbelstromelement 36a bewegt. Zur Vermeidung eines magnetischen Kurzschlusses sind das Mitnahmeelement 92a und die Spindel 86a aus einem unmagnetisierbaren Material ausgebildet, wie beispielsweise Edelstahl usw.

Die Magnetfeldbremseinheit 14a ist in einem Ruhezustand des Winkelschleifers 60a in einem Bremsmodus. Im Bremsmodus stehen sich jeweils entgegengesetzt gerichtete Polaritäten derWinkelsegmente 116a, 118a des ersten Permanentmagnets 20a und der Winkelsegmente des zweiten Permanentmagnets 22a, entlang der Rotationsachse 108a des Tellerrads 82a betrachtet, gegenüber. Bei einer Inbetriebnahme des Winkelschleifers 60a durch eine Bestromung einer Elektromotoreinheit der Antriebseinheit 30a wird das Tellerrad 82a durch das Ritzel 84a angetrieben. Hierbei wird das Tellerrad 82a relativ zum Mitnahmeelement 92a um die Rotationsachse 108a verdreht, bis die Drehmitnahmeelemente 102a, 104a, 106a an Randbereichen der Drehmitnahmeausnehmungen 110a, 112a, 114a anliegen. Hierdurch wird das Tellerrad 82a drehfest mit der Spindel 86a gekoppelt. Die Spindel 86a wird infolgedessen rotierend angetrieben. Das an der Spindel 86a befestigte Bearbeitungswerkzeug 68a wird somit ebenfalls rotierend angetrieben. In einem Betrieb des Winkelschleifers 60a wirken geringe magnetische Kräfte auf das Wirbelstromelement 36a ein. Zur Verringerung der magnetischen Kräfte ist es auch denkbar, dass die Permanentmagnete 20a, 22a zusätzlich zur Verdrehung relativ zueinander mittels der Aktivierungseinheit 16a entlang der Rotationsachse 108a translatorisch relativ zueinander bewegt werden. Hierbei kann eine Distanz zwischen den Permanentmagneten 20a, 22a verändert werden. Es kann beispielsweise eine Nut an der Spindel 122a vorgesehen sein, die entlang der Rotationsachse 108a eine mathematisch definierte Steigung aufweist. In die Nut könnte beipielsweise ein Hubelement eingreifen. Infolge einer Relativbewegung um die Rotationsachse 108a des Tellerrads 82a könnte der erste Permanentmagnet 20a in eine vom Mitnahmeelement 92a weggerichtete Richtung relativ zum zweiten Permanentmagnet 22a bewegt werden.

Der erste Permanentmagnet 20a wird infolge der Relativbewegung zwischen dem Tellerrad 82a und dem Mitnahmeelement 92a relativ zum zweiten Permanentmagnet 22a verdreht. Hierdurch wird die Magnetfeldbremseinheit 14a in einen Betriebsmodus geschaltet, in dem geringe magnetische Kräfte der Magnetfeldbremseinheit 14a auf das Wirbelstromelement 36a einwirken. Die Aktivierungseinheit 16a ändert bei einem Übergang von einem Bremsmodus in einen Betriebsmodus eine Polstellung des ersten Permanentmagnets 20a relativ zu dem zweiten Permanentmagnet 22a der Magnetfeldbremseinheit 14a. Im Betriebsmodus stehen sich somit jeweils gleich gerichtete Polaritäten der Winkelsegmente 116a, 118a des ersten Permanentmagnets 20a und der Winkelsegmente des zweiten Permanentmagnets 22a, entlang der Rotationsachse 108a des Tellerrads 82a betrachtet, gegenüber.

Bei einem Ausschalten des Winkelschleifers 60a wird das Ritzel 84a durch die Elektromotoreinheit abgebremst. Das auf der Spindel 86a befestigte Bearbeitungswerkzeug 68a dreht sich infolge einer Massenträgheit weiter. Die Spindel 86a wird somit ebenfalls weiter um die Rotationsachse 108a gedreht. Das Bearbeitungswerkzeug 68a weist im Vergleich zum Ritzel 84a größere Massenträgheitsmomente auf. Das Ritzel 84a bremst somit das Tellerrad 82a ab. Das Tellerrad 82a wird relativ zum Mitnahmeelement 92a um die Rotationsachse 108a verdreht, bis die Drehmitnahmeelemente 102a, 104a, 106a an Randbereichen der Drehmitnahmeausnehmungen 110a, 112a, 114a anliegen. Die Magnetfeldbremseinheit 14a wird hierbei in einen Bremsmodus geschaltet. Die zwei Permanentmagnete 20a, 22a werden relativ zueinander verdreht. Der erste Permanentmagnet 20a wird hierbei relativ zum zweiten Permanentmagnet 22a verdreht, bis sich jeweils entgegengesetzt gerichtete Polaritäten der Winkelsegmente 116a, 118a des ersten Permanentmagnets 20a und der Winkelsegmente des zweiten Permanentmagnets 22a, entlang der Rotationsachse 108 des Tellerrads 82a betrachtet, gegenüberstehen. Hierdurch wird im Wirbelstromelement 36a eine Spannung induziert. Die induzierte Spannung bewirkt einen Stromfluss senkrecht und wirbelförmig zu einem magnetischen Fluss der Magnetfeldbremseinheit 14a. Hierbei werden Wirbelströme gebildet. Die Wirbelströme erzeugen in dem Wirbelstromelement 36a ein magnetisches Feld, das einem magnetischen Feld der Permanentmagnete 20a, 22a entgegenwirkt. Hierdurch wird ein Bremsmoment erzeugt, das die sich mit der Spindel 86a relativ zum Wirbelstromelement 36a drehenden Permanentmagnete 20a, 22a abbremst. Somit werden die Spindel 86a und das Bearbeitungswerkzeug 68a ebenfalls abgebremst. Eine Stärke des magnetischen Felds der Magnetfeldbremseinheit 14a und somit einer Ausbreitung eines magnetischen Flusses der Magnetfeldbremseinheit 14a zur Erzeugung des Bremsmoments ist abhängig von einer Distanz entlang der Rotationsachse 108a zwischen dem ersten Permanentmagnet 20a und dem zweiten Permanentmagnet 22a und von einer Polstellung entlang der Umfangsrichtung 80a des ersten Permanentmagnets 20a und des zweiten Permanentmagnets 22a relativ zueinander.

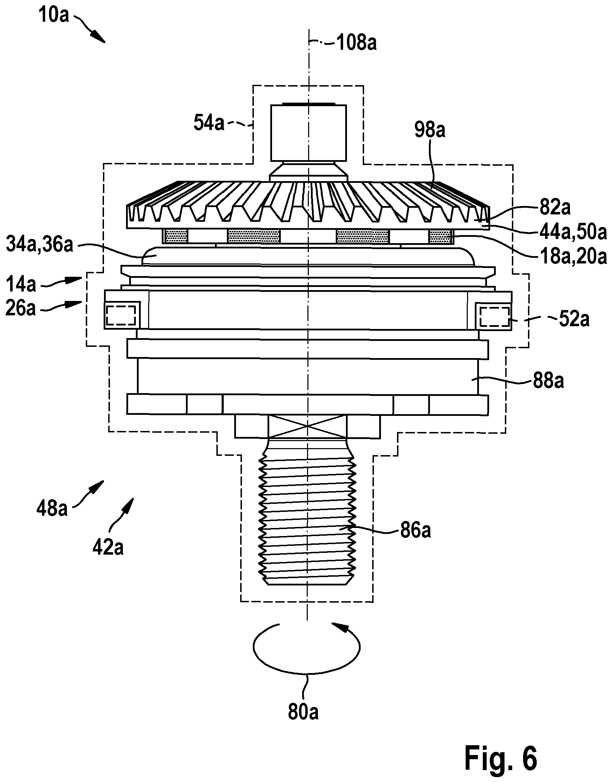

Des Weiteren ist die Magnetfeldbremseinheit 14a zusammen mit der Aktivierungseinheit 16a und der Abtriebseinheit 42a als Montagemodul 54a ausgebildet (Figur 6). Somit bildet das Montagemodul 54a die Werkzeugmaschinenbremsvorrichtung 10a. Das Montagemodul 54a umfasst vier als Schrauben ausgebildete Befestigungselemente (hier nicht dargestellt). Die Schrauben sind dazu vorgesehen, das Montagemodul 54a lösbar mit dem Getriebegehäuse 76a zu verbinden. Ein Bediener kann das Montagemodul 54a bei Bedarf von dem Getriebegehäuse 76a demontieren. Der Winkelschleifer 60a und die Werkzeugmaschinenbremsvorrichtung 10a bilden somit ein Werkzeugmaschinensystem. Das Werkzeugmaschinensystem umfasst ein weiteres Montagemodul 120a. Das weitere Montagemodul 120a umfasst eine als Winkelgetriebe ausgebildete Abtriebseinheit 122a. Das weitere Montagemodul 120a kann vom Bediener alternativ zum Montagemodul 54a am Getriebegehäuse 76a montiert werden. Ein Bediener hat somit die Möglichkeit, den Winkelschleifer 60a mit einem Montagemodul 54a mit einer Magnetfeldbremseinheit 14a, einer Aktivierungseinheit 16a und einer Abtriebseinheit 42a oder mit einem Montagemodul 120a mit einer Antriebseinheit 122a auszustatten. Für einen Anwendungsfall, in dem der Winkelschleifer 60a entkoppelt von der Werkzeugmaschinenbremsvorrichtung 10a betrieben werden soll, kann das Montagemodul 54a durch das weitere Montagemodul 120a des Werkzeugmaschinensystems von einem Bediener ausgetauscht werden. Hierzu demontiert der Bediener lediglich das Montagemodul 54a von dem Getriebegehäuse 76a und montiert das weitere Montagemodul 120a am Getriebegehäuse 76a.

In einer alternativen Ausführung der Werkzeugmaschinenbremsvorrichtung 10a ist es denkbar, dass die Werkzeugmaschinenbremsvorrichtung 10a zusätzlich zur Magnetfeldbremseinheit 14a eine weitere Magnetfeldbremseinheit aufweist, die in dem Motorgehäuse 74a des Winkelschleifers 60a angeordnet ist. Hierbei könnte die Werkzeugmaschinenbremsvorrichtung 10a die Antriebseinheit 30a umfassen, die ein Antriebselement aufweist, an dem ein Bremselement der weiteren Magnetfeldbremseinheit angeordnet ist. Ferner ist es denkbar, dass die Werkzeugmaschinenbremsvorrichtung 10a eine Kühleinheit umfasst, die dazu vorgesehen ist, von der Magnetfeldbremseinheit 14a im Bremsmodus infolge einer inneren Reibung des Wirbelstromelements 36a erzeugte Wärme abzuführen. Ferner ist es denkbar, dass die Magnetfeldbremseinheit 14a einen Elektromagnet 52a (hier gestrichelt angedeutet) aufweist. Der Elektromagnet 52a kann dazu vorgesehen sein, während eines Anlaufens der Antriebseinheit 30a ein zusätzliches Drehmoment zur Erreichung einer Arbeitsdrehzahl der Elektromotoreinheit in einer kurzen Zeitspanne zu ermöglichen, wie vorzugsweise zur Erreichung eines Boostbetriebs. Es ist jedoch auch denkbar, dass der Elektromagnet 52a dazu vorgesehen ist, ein magnetisches Feld der Permanentmagnete 20a, 22a zu verstärken. Hierdurch kann ein starkes Bremsmoment zum Abbremsen des Wirbelstromelements 36a erreicht werden. Der Elektromagnet 52a kann hierbei beispielsweise mit einer Sicherheitseinheit (hier nicht dargestellt) gekoppelt sein, die den Elektromagnet 52a beispielsweise bei einem Bersten eines Bearbeitungswerkzeugs 68a aktiviert, um ein Weiterdrehen einer Spindel des Winkelschleifers 60a zu verhindern bzw. abzubremsen.

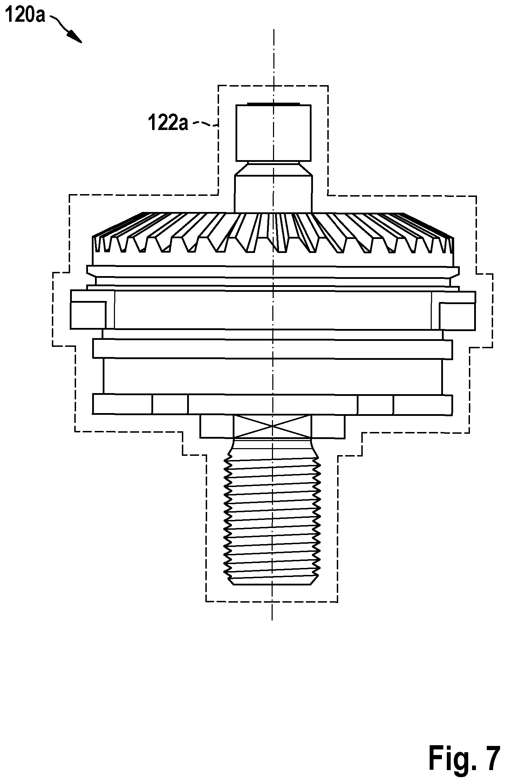

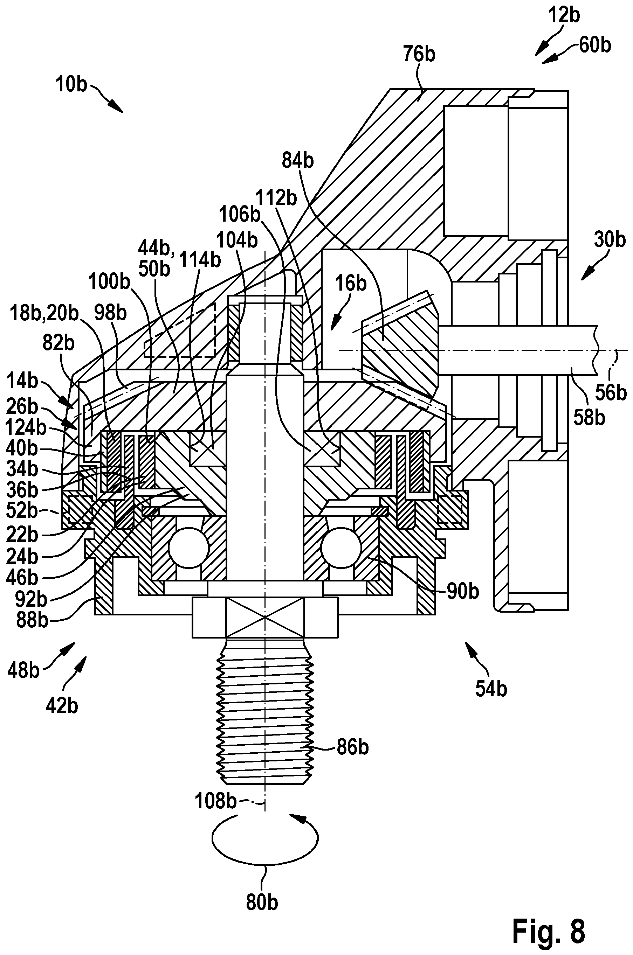

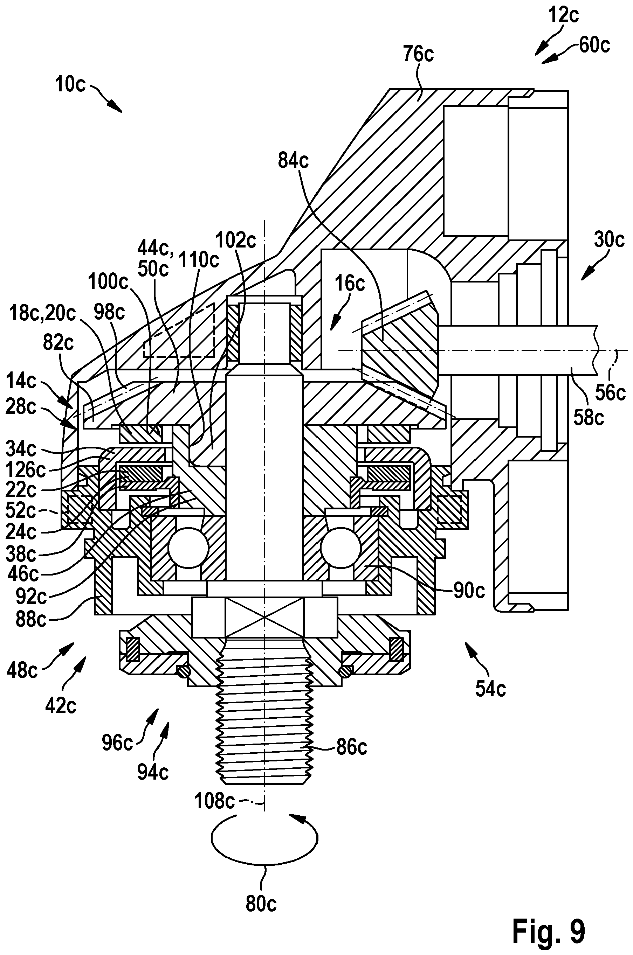

In Figuren 8 und 9 sind alternative Ausführungsbeispiele dargestellt. Im Wesentlichen gleichbleibende Bauteile, Merkmale und Funktionen sind grundsätzlich mit den gleichen Bezugszeichen beziffert. Zur Unterscheidung der Ausführungsbeispiele sind den Bezugszeichen der Ausführungsbeispiele die Buchstaben a bis c hinzugefügt. Die nachfolgende Beschreibung beschränkt sich im Wesentlichen auf die Unterschiede zu dem ersten Ausführungsbeispiel in den Figuren 1 bis 7, wobei bezüglich gleichbleibender Bauteile, Merkmale und Funktionen auf die Beschreibung des ersten Ausführungsbeispiels in den Figuren 1 bis 7 verwiesen werden kann.

Figur 8 zeigt eine alternativ in einem Getriebegehäuse 76b eines Winkelschleifers 60b angeordnete Werkzeugmaschinenbremsvorrichtung 10b. Die Werkzeugmaschinenbremsvorrichtung 10b umfasst eine Magnetfeldbremseinheit 14b, die als Wirbelstrombremse 26b ausgebildet ist. Ferner umfasst die Werkzeugmaschinenbremsvorrichtung 10b eine mechanische Aktivierungseinheit 16b. Die mechanische Aktivierungseinheit 16b weist einen zur mechanischen Aktivierungseinheit 16a aus Figur 2 analogen Aufbau auf. Die Aktivierungseinheit 16b ist dazu vorgesehen, infolge einer Relativbewegung eine Kenngröße eines magnetischen Felds der Magnetfeldbremseinheit 14b zu ändern. Die Magnetfeldbremseinheit 14b weist ein als erster Permanentmagnet 20b ausgebildetes Bremselement 18b auf, das drehfest mit einem als Tellerrad 82b ausgebildeten Abtriebselement 44b einer Abtriebseinheit 42b der Werkzeugmaschinenbremsvorrichtung 10b verbunden ist. Ferner weist die Magnetfeldbremseinheit 14b ein als zweiter Permanentmagnet 22b ausgebildetes Bremselement 24b auf, das drehfest mit einem als Mitnahmeelement 92b ausgebildeten Abtriebselement 46b der Abtriebseinheit 42b verbunden ist. Das Mitnahmeelement 92b ist aus einem magnetisch leitenden Material ausgebildet, wie beispielsweise einem ferromagnetischen Material. Hierdurch kann ein magnetisches Feld des zweiten Permanentmagnets 22b im Bereich des zweiten Permanentmagnets 22b verdichtet werden und es können Streuflüsse gering gehalten werden.

Die Permanentmagnete 20b, 22b sind rohrförmig ausgebildet. Der erste Permanentmagnet 20b ist hierbei mittels eines Rückschlusselements 40b an einem Bund 124b des Tellerrads 82b angeordnet. Der Bund 124b ist entlang einer Umfangsrichtung 80b entlang eines gesamten Umfangs des Tellerrads 82b angeordnet. Die Umfangsrichtung 80b verläuft in einer senkrecht zu einer Rotationsachse 108b des Tellerrads 82b verlaufenden Ebene. Der Bund 124b erstreckt sich ferner senkrecht zu einer einer Verzahnung 98b abgewandten Seite 100b in eine von der Verzahnung weggerichteten Richtung. Der zweite Permanentmagnet 22b ist an einem sich entlang der Umfangsrichtung 80b erstreckenden Außenumfang des Mitnahmeelements 92b angeordnet. Die Permanentmagnete 20b, 22b sind somit radial entlang einer Richtung senkrecht zur Rotationsachse 108b beabstandet zueinander angeordnet. Die Magne tfeldbremseinheit 14b umfasst ferner ein weiteres als Wirbelstromelement 36b ausgebildetes Bremselement 34b. Das Wirbelstromelement 36b ist entlang der Richtung senkrecht zur Rotationsachse 108b zwischen den Permanentmagneten 20b, 22b angeordnet. Ferner ist das Wirbelstromelement 36b aus einem elektrisch leitfähigen Material gebildet, wie beispielsweise Aluminium und/oder Kupfer. Die Aktivierungseinheit 16b ändert eine Polstellung des ersten Permanentmagnets 20b relativ zum zweiten Permanentmagnet 22b. Hinsichtlich einer Funktionsweise der Aktivierungseinheit 16b und einer Funktionsweise der als Wirbelstrombremse 26b ausgebildeten Magnetfeldbremseinheit 14b kann auf die Beschreibung der Figuren 1 bis 7 verwiesen werden.

Des Weiteren ist die Magnetfeldbremseinheit 14b zusammen mit der Aktivierungseinheit 16b und der Abtriebseinheit 42b als Montagemodul 54b ausgebildet. Somit bildet das Montagemodul 54b die Werkzeugmaschinenbremsvorrichtung 10b.

Figur 9 zeigt eine weitere alternative in einem Getriebegehäuse 76c eines Winkelschleifers 60c angeordnete Werkzeugmaschinenbremsvorrichtung 10c. Die Werkzeugmaschinenbremsvorrichtung 10c umfasst eine Magnetfeldbremseinheit 14c, die als Hysteresebremse 28c ausgebildet ist. Ferner umfasst die Werkzeugmaschinenbremsvorrichtung 10c eine mechanische Aktivierungseinheit 16c. Die mechanische Aktivierungseinheit 16c weist einen zur mechanischen Aktivierungseinheit 16a aus Figur 2 analogen Aufbau auf. Die Aktivierungseinheit 16c ist dazu vorgesehen, infolge einer Relativbewegung eine Kenngröße eines magnetischen Felds der Magnetfeldbremseinheit 14c zu ändern. Ferner weist die Magnetfeldbremseinheit 14c einen im Wesentlichen analogen Aufbau im Vergleich zum Aufbau der Magnetfeldbremseinheit 14a aus Figur 2 auf. Die Magnetfeldbremseinheit 14c weist ein als erster Permanentmagnet 20c ausgebildetes Bremselement 18c auf, das drehfest mit einem als Tellerrad 82c ausgebildeten Abtriebselement 44c einer Abtriebseinheit 42c der Werkzeugmaschinenbremsvorrichtung 10c verbunden ist. Ferner weist die Magnetfeldbremseinheit 14c ein als zweiter Permanentmagnet 22c ausgebildetes Bremselement 24c auf, das drehfest mit einem als Mitnahmeelement 92c ausgebildeten Abtriebselement 46c der Abtriebseinheit 42c verbunden ist. Des Weiteren weist die Magnetfeldbremseinheit 14c ein weiteres als Hystereseelement 126c ausgebildetes Bremselement 34c auf. Das Hystereseelement 126c ist entlang einer Rotationsachse 108c des Tellerrads 82c axial zwischen dem ersten Permanentmagnet 20c und dem zweiten Permanentmagnet 22c angeordnet. Es ist jedoch auch denkbar, dass das Hystereseelement 126c entlang einer Richtung senkrecht zur Rotationsachse 108c zwischen den Permanentmagneten 20c, 22c angeordnet ist (vgl. Figur 8).

In einem Bremsmodus der Magnetfeldbremseinheit 14c stehen sich jeweils gleich gerichtete Polaritäten von Winkelsegmenten des ersten Permanentmagnets 20c und von Winkelsegmenten des zweiten Permanentmagnets 22c, entlang der Rotationsachse 108c des Tellerrads 82c betrachtet, gegenüber. Hierbei wirkt ein magnetisches Feld der Permanentmagnete 20c, 22c auf das Hystereseelement 126c ein. Hierdurch wird ein Kraftlinienfluss entlang einer Umfangsrichtung 80c in dem Hystereseelement 126c erzeugt. Der Kraftlinienfluss erzeugt ein Drehmoment, welches einer Drehbewegung der sich mit einer Spindel 86c der Abtriebseinheit 42c drehenden Permanentmagnete 20c, 22c entgegenwirkt. Somit werden die Permanentmagnete 20c, 22c abgebremst. Das Drehmoment zur Bremsung der Permanentmagnete 20c, 22c erzeugt bei einem Stillstand der Permanentmagnete 20c, 22c eine auf die Permanentmagnete 20c, 22c wirkende Haltekraft. Somit kann die als Hysteresebremse 28c ausgebildete Magnetfeldbremseinheit 14c als Haltebremse eingesetzt werden. In einem Betriebsmodus stehen sich jeweils entgegengesetzt gerichtete Polaritäten der Winkelsegmente 116c, 118c des ersten Permanentmagnets 20c und der Winkelsegmente des zweiten Permanentmagnets 22c, entlang der Rotationsachse 108c des Tellerrads 82c betrachtet, gegenüber. Es wirken geringe magnetische Kräfte eines magnetischen Felds der Permanentmagnete 20c, 22c auf das Hystereseelement 126c ein. Hierbei verläuft ein Kraftlinienfluss senkrecht entlang der Rotationsachse 108c durch das Hystereseelement 126c hindurch.

Des Weiteren ist die Magnetfeldbremseinheit 14c zusammen mit der Aktivierungseinheit 16c und der Abtriebseinheit 42c als Montagemodul 54c ausgebildet. Somit bildet das Montagemodul 54c die Werkzeugmaschinenbremsvorrichtung 10c.

## Patentansprüche

1. Werkzeugmaschinenbremsvorrichtung, insbesondere Handwerkzeugma schinenbremsvorrichtung einer tragbaren Werkzeugmaschine (12a; 12b: 12c) mit zumindest einer Magnetfeldbremseinheit (14a; 14b; 14c) und mit zumindest einer Abtriebseinheit (42a, 42b 42c), die zumindest ein Abtriebselement (44a. 46a; 44b. 46b; 44c, 46c) aufweist, an dem zumindest ein Bremselement (18a, 24a. 18b, 24b: 18c, 24c) der Magnetfeldbremseinheit (14a; 14b: 14c) angeordnet ist, **dadurch gekennzeichnet, dass** die Magnetfeldbremseinheit (14a; 14b; 14c) zumindest zwei Bremselemente (18a, 24a; 18b, 24b 18c, 24c) umfasst, die als Permanentmagnete (20a, 22a, 20b, 22b; 20c, 22c) ausgebildet sind, wobei die als Permanentmagnete (20a, 22a; 20b, 22b; 20c, 22c) ausgebildeten Bremselemente (18a, 24a; 18b, 24b; 18c, 24c) relativ zueinander beweglich gelagert sind

2. Werkzeugmaschinenbremsvorrichtung nach Ansprucn 1, **dadurch gekennzeichnet, dass** die Abtriebseinheit (42a; 42b; 42c) als Winkelgetriebe (48a; 48b, 48c) ausgebildet ist

3. Werkzeugmaschinenbremsvorrichtung nach Anspruch 2. **dadurch gekennzeichnet, dass** die Magnetfeldbremseinheit (14a; 14b 14c) entlang eines Kraftflusses zumindest teilweise hinter einem Getriebeeingangszahnrad (50a: 50b; 50c) des Winkelgetriebes (48a, 48b, 48c) angeordnet ist.

4. Werkzeugmaschinenbremsvorrichtung nach einem der vorhergehenden Ansprüche, **gekennzeichnet durch** zumindest eine mechanische Aktivierungseinheit (16a; 16b; 16c).

5. Werkzeugmaschinenbremsvorrichtung nach Anspruch 4. **dadurch gekennzeichnet, dass** die Aktivierungseinheit (16a; 16b; 16c) infolge einer Relativbewegung wenigstens eine Kenngröße eines magnetischen Felds der Magnetfeldbremseinheit (14a, 14b, 14c) andert.

6. Werkzeugmaschinenbremsvorrichtung nach Anspruch 4 **dadurch gekennzeichnet, dass** die Aktivierungseinheit (16a; 16b; 16c) eine Polstellung des Permanentmagnets (20a; 20b; 20c) relativ zu dem weiteren als Permanentmagnet (22a; 22b; 22c) ausgebildeten Bremselement (24a; 24b; 24c) der Magnetfeldbremseinheit (14a; 14b; 14c) ändert

7. Werkzeugmaschinenbremesvorrichtung nach einem der vorhergehenden Ansprüche, **dadurch gekennzeichnet, dass** die Magnetfeldbremseinheit (14a; 14b) als Wirbelstrombremse (26a; 26b) ausgebildet ist

8. Werkzeugmaschinenbremsvorrichtung nech einem der Ansprüche 1 bis 6, **dadurch gekennzeichnet, dass** die Magnetfeldbremseinheit (14c) als Hysteresebremse (28c) ausgebildet ist

9. Tragbare Werkzeugmaschine, insbesondere Handwerkzeugmaschine, mit einer Werkzeugmaschinenbremsvorrichtung nach einem der vorhergehenden Ansprüche.

## Claims

1. Power tool braking device, in particular a hand-held power tool braking device, of a portable power tool (12a; 12b; 12c) having at least one magnetic field braking unit (14a; 14b; 14c) and having at least one output unit (42a; 42b; 42c), which comprises at least one output element (44a, 46a; 44b, 46b; 44c, 46c), on which at least one braking element (18a, 24a; 18b, 24b;, 18c, 24c) of the magnetic field braking unit (14a; 14b; 14c) is arranged, **characterized in that** the magnetic field braking unit (14a; 14b; 14c) comprises at least two braking elements (18a, 24a; 18b, 24b; 18c, 24c), which are formed as permanent magnets (20a, 22a; 20b, 22b; 20c, 22c), wherein the braking elements (18a, 24a; 18b, 24b; 18c, 24c) which are formed as permanent magnets (20a, 22a; 20b, 22b; 20c, 22c) are movably mounted relative to one another.

2. Power tool braking device according to Claim 1, **characterized in that** the output unit (42a; 42b; 42c) is formed as a bevel gear (48a; 48b; 48c).

3. Power tool braking device according to Claim 2, **characterized in that** the magnetic field braking unit (14a; 14b; 14c) is arranged at least in part after an input gearwheel (50a; 50b; 50c) of the bevel gear (48a; 48b; 48c) along a flux of force.

4. Power tool braking device according to one of the preceding claims
**characterized by** at least one mechanical activation unit (16a; 16b; 16c).

5. Power tool braking device according to Claim 4,
**characterized in that** the activation unit (16a; 16b; 16c) changes at least one characteristic of a magnetic field of the magnetic field braking unit (14a; 14b; 14c) as a result of a relative movement.

6. Power tool braking device according to Claim 4,
**characterized in that** the activation unit (16a; 16b; 16c) changes a pole position of the permanent magnet (20a; 20b; 20c) relative to the further braking element (24a; 24b; 24c) of the magnetic field braking unit (14a; 14b; 14c), said further braking element being formed as a permanent magnet (22a; 22b; 22c).

7. Power tool braking device according to one of the preceding claims,
**characterized in that** the magnetic field braking unit (14a; 14b) is formed as an eddy current brake (26a; 26b).

8. Power tool braking device according to one of Claims 1 to 6,
**characterized in that** the magnetic field braking unit (14c) is formed as a hysteresis brake (28c).

9. Portable power tool, in particular a hand-held power tool, having a power tool braking device according to one of the preceding claims.

## Revendications

1. Ensemble de frein pour outil motorisé, en particulier ensemble de frein pour outil motorisé manuel, à savoir pour outil motorisé portable (12a; 12b; 12c), et présentant au moins une unité (14a; 14b; 14c) de freinage à champ magnétique et au moins une unité entraînée (42a; 42b; 42c) qui présente au moins un élément entraîné (44a, 46a; 44b, 46b; 44c, 46c) sur lequel le ou les éléments de frein (18a, 24a; 18b, 24b; 18c, 24c) de l'unité (14a; 14b; 14c) de freinage à champ magnétique sont disposés,
**caractérisé en ce que**
l'unité (14a; 14b; 14c) de freinage à champ magnétique comporte au moins deux éléments de frein (18a, 24a, 18b, 24b; 18c, 24c) configurés comme aimants permanents (20a, 22a; 20b, 22b; 20c, 22c), les éléments de frein (18a, 24a, 18b, 24b; 18c, 24c) configurés comme aimants permanents (20a, 22a; 20b, 22b; 20c, 22c) étant montés de manière à pouvoir se déplacer les uns par rapport aux autres.

2. Ensemble de frein pour outil motorisé selon la revendication 1, **caractérisé en ce que** l'unité entraînée (42a; 42b; 42c) est configurée comme transmission coudée (48a; 48b; 48c).

3. Ensemble de frein pour outil motorisé selon la revendication 2, **caractérisé en ce que** l'unité (14a; 14b; 14c) de freinage à champ magnétique est disposée suivant une ligne de force au moins en partie à la suite d'un pignon denté (50a; 50b; 50c) d'entrée de la transmission coudée (48a; 48b; 48c).

4. Ensemble de frein pour outil motorisé selon l'une des revendications précédentes, **caractérisé par** au moins une unité mécanique d'activation (16a; 16b; 16c).

5. Ensemble de frein pour outil motorisé selon la revendication 4, **caractérisé en ce que** l'unité mécanique d'activation (16a; 16b; 16c) modifie au moins une grandeur caractéristique du champ magnétique de l'unité (14a; 14b) de freinage à champ magnétique suite à un déplacement relatif.

6. Ensemble de frein pour outil motorisé selon la revendication 4, **caractérisé en ce que** l'unité mécanique d'activation (16a; 16b; 16c) modifie la position du pôle de l'aimant permanent (20a, 20b, 20c) par rapport à l'autre élément de frein (24a, 24b, 24c) configurée comme aimant permanent (22a, 22b, 22c) de l'unité (14a; 14b; 14c) de freinage à champ magnétique.

7. Ensemble de frein pour outil motorisé selon l'une des revendications précédentes, **caractérisé en ce que** l'unité (14a; 14b; 14c) de freinage à champ magnétique est configurée comme frein (24a; 26b) à courant de Foucault.

8. Ensemble de frein pour outil motorisé selon l'une des revendications 1 à 6, **caractérisé en ce que** l'unité (14c) de freinage à champ magnétique est configurée comme frein (28c) à hystérèse.

9. Outil motorisé portable, en particulier outil motorisé manuel, présentant un ensemble de frein pour outil motorisé selon l'une des revendications précédentes.
